# EUROPEAN PATENT APPLICATION

(11) **EP 4 475 602 A1**
(43) Date of publication of application: **11.12.2024**
(21) Application number: 23759279.5
(22) Date of filing: 24.02.2023
(51) Int. Cl.: H04W 52/02

(54) **COMMUNICATION METHOD AND APPARATUS**

(30) Priority: 28.02.2022 CN 202210183754
(71) Applicant: Huawei Technologies Co., Ltd., Shenzhen, Guangdong 518129 (CN)
(72) Inventor: ZHANG, Chengchen, Shenzhen, Guangdong 518129 (CN); ZONG, Zaifeng, Shenzhen, Guangdong 518129 (CN)
(74) Representative: Grünecker Patent- und Rechtsanwälte PartG mbB
(86) International application number: PCT/CN2023/078198
(87) International publication number: WO 2023/160657

(57) **Abstract**

This application provides a communication method and apparatus. The method includes: A first access network element determines that a terminal device is in a suspended state and that the first access network element cannot serve the terminal device when the terminal device is recovered to a connected state. The first access network element sends a context of the terminal device to a second access network element. The context is used by the terminal device to be recovered to the connected state. In the method, when determining that the terminal device is in the suspended state and that the first access network element cannot subsequently serve the terminal device, the first access network element can actively send the context of the terminal device to the second access network element. This can ensure that a target access network element can obtain the context of the terminal device, to quickly recover a connection for the terminal device and implement energy saving.

## Description

### CROSS-REFERENCE TO RELATED APPLICATIONS

This application claims priority to Chinese Patent Application No. 202210183754.X, filed with the China National Intellectual Property Administration on February 28, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

An energy-saving feature is defined for an internet of things device in the 3rd Generation Partnership Project (3rd generation partnership project, 3GPP) defines. The internet of things device may save energy in a plurality of manners. In one manner, that the internet of things device enters a suspended state. The suspended state is a suspended idle state. When the internet of things device enters the idle state, a radio access network (radio access network, RAN) stores context information, so that the internet of things device in the suspended state quickly recovers a connection. In this way, the internet of things device and the RAN can quickly recover the connection by using the stored context information, to implement energy saving.

When the internet of things device requests to recover the connection, if the RAN that serves the internet of things device does not change, the connection may be directly recovered for the internet of things device. If the RAN that serves the internet of things device changes, a target RAN that serves the internet of things device requests the context information from the source RAN, to recover the connection for the internet of things device.

Because the internet of things device moves, or a satellite moves when the RAN is deployed on the satellite, a distance between the source RAN and the target RAN that serves the internet of things device may be long, a delay of querying a context by the target RAN from the source RAN is excessively long, and the context information cannot be queried in time. Consequently, the internet of things device needs to recover the connection based on a normal access procedure, and an energy saving requirement cannot be met.

### SUMMARY

Embodiments of this application provide a communication method and apparatus, to quickly recover a connection for a terminal device, so as to implement energy saving.

According to a first aspect, a communication method is provided, including the following process. A first access network element determines that a terminal device is in a suspended state and that the first access network element cannot serve the terminal device when the terminal device is recovered to a connected state. The first access network element sends a context of the terminal device to a second access network element. The context is used by the terminal device to be recovered to the connected state. The second access network element serves the terminal device when the terminal device is recovered to the connected state (in this case, the second access network element may be referred to as a target access network element), or the second access network element is configured to send the context to a third access network element that serves the terminal device when the terminal device is recovered to the connected state (in this case, the third access network element may be referred to as a target access network element).

In a communication process, because the terminal device moves, or a satellite moves when an access network element is deployed on the satellite, an access network element that serves the terminal device may change. If a changed target access network element does not store the context of the terminal device, the terminal device needs to recover a connection based on an access procedure specified in a standard. Alternatively, a distance between a changed target access network element and a source access network element obtained before change is long, and after the target access network element requests context information from the source access network element, a delay of querying the context from the source access network element is long, and the context cannot be queried in time. In this case, the terminal device also needs to recover a connection based on an access procedure specified in a standard. The access procedure specified in the standard is complex. The terminal device needs to re-establish a context with the target access network element through interaction, and then recover the connection based on the re-established context. Therefore, an energy saving requirement cannot be met. Therefore, in the foregoing solution, when determining that the terminal device is in the suspended state and that the first access network element cannot subsequently serve the terminal device, the first access network element may actively send the context of the terminal device to the second access network element. This can ensure that the target access network element can obtain the context of the terminal device in time, to quickly recover the connection for the terminal device and implement energy saving.

In an example, the first access network element is the source access network element, and the second access network element is the target access network element. In another example, the first access network element is the source access network element, the second access network element sends the context to the target access network element, and the third access network element is the target access network element. The source access network element serves the terminal device before the terminal device requests to recover the connection, and the target access network element serves the terminal device when the terminal device is recovered to the connected state. It may be understood that, in some possible scenarios, the first access network element is an intermediate network element that sends the context, that is, the first access network element may receive the context from the source access network element, and then send the context to the second access network element.

The first access network element may directly send the context to the second access network element, or the first access network element may send the context to the second access network element by using an access management network element. Optionally, the context may be included in a container. In a transmission process, the container is not prone to be decrypted by a network element on a path. This helps information security.

In a possible implementation, the first access network element and/or the second access network element are/is deployed on a satellite. Specifically, a functional component of the first access network element may be all or partially deployed on the satellite, and a functional component of the second access network element may be all or partially deployed on the satellite. In this implementation, the access network element is deployed on the satellite, so that a network access requirement of an area (like a desert or ocean) that is not covered by a terrestrial network can be met.

In a possible implementation, the first access network element and/or the second access network element are/is deployed on a ground base station. Specifically, a functional component of the first access network element may be all or partially deployed on the ground, and a functional component of the second access network element may be all or partially deployed on the ground. In this implementation, the access network element is deployed on the ground, so that an access requirement of a terrestrial network can be met.

In a possible implementation, when the first access network element determines that the first access network element cannot serve the terminal device when the terminal device is recovered to the connected state, the first access network element may determine, based on one or more of ephemeris information, expected behavior information of the terminal device, a new radio condition, load balancing information, or a service type, that the first access network element cannot serve the terminal device when the terminal device is recovered to the connected state. For example, the first access network element may determine, based on the ephemeris information and/or the expected behavior information of the terminal device, that the first access network element cannot serve the terminal device when the terminal device is recovered to the connected state.

The ephemeris information may include a mapping relationship between a satellite and an access network element, to indicate a location of the access network element deployed on the satellite. The expected behavior information of the terminal device may include wake-up period information of the terminal device, to indicate duration from a time point at which the terminal device enters the suspended state to a time point at which the terminal device requests to recover the connection. The new radio condition may indicate signal strength caused by a coverage condition of the first access network element. The load balancing information may indicate a quantity of terminal devices that access a network by using the first access network element. The service type may indicate a service type/business type/session type existing when the terminal device enters the suspended state.

In a possible implementation, the first access network element may determine that the second access network element cannot obtain the context from the first access network element, or a delay of obtaining the context is excessively long. Therefore, the first access network element may send the context to the second access network element by using another network element, to quickly recover the connection for the terminal device. For example, the first access network element may determine, based on the ephemeris information and/or the expected behavior information of the terminal device, that an access network element that serves the terminal device when the terminal device is recovered to the connected state cannot obtain the context from the first access network element, or that duration for obtaining the context from the first access network element exceeds first duration.

In a possible implementation, the first access network element may determine that the second access network element can obtain the context from the first access network element, or a delay of obtaining the context is short. Therefore, the first access network element may directly send the context to the second access network element, to quickly recover the connection for the terminal device. The first access network element may determine, based on the ephemeris information and/or the expected behavior information of the terminal device, that an access network element that serves the terminal device when the terminal device is recovered to the connected state can obtain the context from the first access network element, or that duration for obtaining the context from the first access network element does not exceed first duration.

The first duration is a positive number, and setting of the first duration is not limited herein.

In a possible implementation, when the first access network element sends the context of the terminal device to the second access network element, the first access network element may send the container to the access management network element. The container includes the context sent by the first access network element to the access network element that serves the terminal device when the terminal device is recovered to the connected state. After receiving the container, the access management network element sends the container to the second access network element. In this implementation, the first access network element sends the context to the second access network element by using the access management network element, so that security of the context information can be ensured on the basis of quickly recovering the connection of the terminal device.

In a possible implementation, the first access network element may further send, to the second access network element, time information of entering the suspended state by the terminal device and/or hop count information. The hop count information indicates an accumulated quantity of times that the context is transferred between access network elements in a time period from the time point at which the terminal device enters the suspended state to a current time point.

In some scenarios, the second access network element may determine, based on the time information of entering the state by the terminal device and/or the hop count information, that the terminal device has been in the suspended state for a period of time. However, the connection may not be recovered based on an expected behavior of the terminal device due to a reason like a power failure of the terminal device. If the second access network element continues to store the context of the terminal device, a storage burden may be caused. In this special case, energy saving may not be considered, and the stored context is deleted.

In a possible implementation, the first access network element may further receive a context response message. The context response message indicates that the access management network element or the second access network element has received and/or stored the context. For example, the first access network element may receive the context response message sent by the second access network element, and the first access network element may determine, based on the context response message, that the second access network element has received and/or stored the context. For another example, the first access network element may receive the context response message sent by the access management network element, and the first access network element may determine, based on the context response message, that the access management network element has received and/or stored the context.

In a possible implementation, in a first case, the first access network element may further delete the context of the terminal device.

The first case includes one or more of the following: Duration in which the terminal device is in the suspended state exceeds second duration, an accumulated quantity of times indicated by the hop count information exceeds a first quantity of times, duration after the first access network element sends the context exceeds third duration, or the first access network element receives context response information, where the context response message indicates that the context is received and/or stored.

The second duration, the first quantity of times, and the third duration are positive numbers. Setting of the second duration, the first quantity of times, and the third duration is not limited herein.

In some possible scenarios, if the connection of the terminal device subsequently is recovered by using the first access network element, because the context of the terminal device is deleted from the first access network element, a context needs to be re-established between the terminal device and the first access network element. Then, the first access network element recovers the connection for the terminal device based on the re-established context.

According to a second aspect, a communication method is provided, including the following process. A second access network element receives a request message from a terminal device, and the request message is used to request to recover a connection. The second access network element determines that a context of the terminal device cannot be obtained from a first access network element. The context is used by the terminal device to recover the connection, and the first access network element serves the terminal device before the terminal device requests to recover the connection. The second access network element obtains the context from an access management network element. The context is sent by the first access network element to the access management network element.

For example, the second access network element serves the terminal device when the terminal device is recovered to a connected state, that is, the second access network element is a target access network element.

Optionally, the context may be included in a container. In a transmission process, the container is not prone to be decrypted by a network element on a path.

In a possible implementation, the first access network element and/or the second access network element are/is deployed on a satellite. Specifically, a functional component of the first access network element may be all or partially deployed on the satellite, and a functional component of the second access network element may be all or partially deployed on the satellite.

In a possible implementation, the first access network element and/or the second access network element are/is deployed on a ground base station. Specifically, a functional component of the first access network element may be all or partially deployed on the ground, and a functional component of the second access network element may be all or partially deployed on the ground.

In a possible implementation, when the second access network element determines that the context of the terminal device cannot be obtained from the first access network element, the second access network element determines, based on one or more pieces of information of duration in which the terminal device is in a suspended state, ephemeris information, or hop count information, that the context cannot be obtained from the first access network element. The hop count information indicates an accumulated quantity of times that the context is transferred between access network elements in a time period from a time point at which the terminal device enters the suspended state to a current time point. In this implementation, the second access network element determines that the context cannot be obtained from the first access network element, so that the second access network element can obtain the context by using the access management network element, to quickly recover the connection for the terminal device.

In a possible implementation, the second access network element may further receive time information of entering the suspended state by the terminal device and/or the hop count information. In some scenarios, the second access network element may determine, based on the time information of entering the state by the terminal device and/or the hop count information, that the terminal device has been in the suspended state for a period of time. However, the connection may not be recovered based on an expected behavior of the terminal device due to a reason like a power failure of the terminal device. In this special case, energy saving may not be considered, and the stored context is deleted.

In a possible implementation, when the second access network element obtains the context from the access management network element, the second access network element may receive a container from the access management network element. The container includes the context sent by the first access network element to the second access network element. For example, the access management network element may determine that the terminal device is to recover the connection, and actively send the container to the second access network element. For another example, after receiving information used to request the context, the access management network element may send the container to the second access network element. For example, before the second access network element receives the container from the access management network element, the second access network element may further send context request indication information to the access management network element. The context request indication information is used to request the context.

According to a third aspect, a communication method is provided, including the following process. An access management network element receives a container. The container includes a context sent by a first access network element to a second access network element, the first access network element serves a terminal device before the terminal device requests to recover a connection, the second access network element serves the terminal device when the terminal device is recovered to a connected state, and the context is used by the terminal device to recover the connection. The access management network element stores the container. The access management network element sends the container to the second access network element.

The second access network element is a target access network element.

In a possible implementation, the first access network element and/or the second access network element are/is deployed on a satellite. Specifically, a functional component of the first access network element may be all or partially deployed on the satellite, and a functional component of the second access network element may be all or partially deployed on the satellite.

In a possible implementation, the first access network element and/or the second access network element are/is deployed on a ground base station. Specifically, a functional component of the first access network element may be all or partially deployed on the ground, and a functional component of the second access network element may be all or partially deployed on the ground.

For example, after receiving information used to request the context, the access management network element may send the container to the second access network element. For example, before the access management network element sends the container to the second access network element, the access management network element may further receive context request indication information from the second access network element, where the context request indication information is used to request the context of the terminal device.

For another example, the access management network element may determine that the terminal device is to recover the connection, and actively send the container to the second access network element. For example, before the access management network element sends the container to the second access network element, the access management network element determines, based on ephemeris information and/or expected behavior information of the terminal device, that the terminal device is to recover the connection, and/or determines the second access network element that serves the terminal device when the terminal device is recovered to the connected state. Optionally, in this example, the access management network element may send the container to the second access network element before receiving the context request indication information.

In a possible implementation, after the access management network element receives the container, the access management network element starts a timer; and when the timer expires, the access management network element deletes the stored container.

In some possible scenarios, if the connection of the terminal device subsequently is recovered by using the target access network element, because the context of the terminal device is deleted from the access management network element, the target access network element cannot obtain the context from the access management network element, and a context needs to be re-established between the terminal device and the target access network element. Then, the target access network element recovers the connection for the terminal device based on the re-established context.

According to a fourth aspect, a communication apparatus is provided. The communication apparatus may be a first access network element, a second access network element, or an access management network element, or may be a chip disposed in the first access network element, the second access network element, or the access management network element. The communication apparatus may implement the method provided in any one of the foregoing aspects.

The communication apparatus includes a corresponding module, unit, or means (means) for implementing the foregoing method. The module, unit, or means may be implemented by using hardware or software, or implemented by using hardware by executing corresponding software. The hardware or the software includes one or more modules or units corresponding to the foregoing functions.

According to a fifth aspect, a communication apparatus is provided, including a transceiver unit. Optionally, the communication apparatus may further include a processing unit. The communication apparatus may implement the method provided in any one of the foregoing aspects or the implementations of the foregoing aspects.

According to a sixth aspect, a communication apparatus is provided, including a processor. The processor may be configured to perform the method provided in any one of the foregoing aspects or the implementations of the foregoing aspects. Optionally, the apparatus further includes a memory. The processor is coupled to the memory. The memory is configured to store a computer program or instructions. The processor may execute the program or the instructions stored in the memory, to enable the apparatus to perform the method provided in any one of the foregoing aspects or the implementations of the foregoing aspects.

According to a seventh aspect, a communication apparatus is provided. The apparatus includes an interface circuit and a logic circuit, and the logic circuit is coupled to the interface circuit. The interface circuit may be a code/data read/write interface circuit. The interface circuit is configured to: receive computer-executable instructions (the computer-executable instructions are stored in a memory, and may be directly read from the memory, or may be read through another component) and transmit the computer-executable instructions to the logic circuit, to enable the logic circuit to run the computer-executable instructions, to perform the method provided in any one of the foregoing aspects or the implementations of the foregoing aspects.

In some possible designs, the communication apparatus may be a chip or a chip system.

According to an eighth aspect, a communication apparatus is provided, including a processor. The processor is coupled to a memory. The processor is configured to: read instructions stored in the memory, receive a signal by using a receiver, and transmit a signal by using a transmitter, to perform the method provided in any one of the foregoing aspects or the implementations of the foregoing aspects.

Optionally, there may be one or more processors, and one or more memories. Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be disposed on different chips. A type of the memory and a manner of disposing the memory and the processor are not limited in this application.

The communication apparatus may be a chip. The processor may be implemented by using hardware, or may be implemented by using software. When the processor is implemented by using hardware, the processor may be a logic circuit, an integrated circuit, or the like. Alternatively, when the processor is implemented by using software, the processor may be a general-purpose processor, and is implemented by reading software code stored in the memory. The memory may be integrated into the processor, or may be located outside the processor and exist independently.

According to a ninth aspect, a processor is provided, including an input circuit, an output circuit, and a processing circuit. The processing circuit is configured to: receive a signal through the input circuit, and transmit a signal through the output circuit, to enable the processor to perform the method provided in any one of the foregoing aspects or the implementations of the foregoing aspect.

In a specific implementation process, the processor may be a chip, the input circuit may be an input pin, the output circuit may be an output pin, and the processing circuit may be a transistor, a gate circuit, a trigger, various logic circuits, or the like. The input signal received by the input circuit may be received and input by, for example, but not limited to, a receiver. The signal output by the output circuit may be output to, for example, but not limited to, a transmitter and transmitted by the transmitter. The input circuit and the output circuit may be a same circuit, and the circuit is separately used as the input circuit and the output circuit at different moments. Specific implementations of the processor and various circuits are not limited in this application.

According to a tenth aspect, a communication apparatus is provided, including a logic circuit and an input/output interface. The input/output interface is configured to communicate with a module outside the communication apparatus. The logic circuit is configured to run a computer program or instructions to perform the method provided in any design of the foregoing aspects. The communication apparatus may be the first access network element, the second access network element, or the access management network element in any one of the foregoing aspects, or an apparatus including the first access network element, the second access network element, or the access management network element, or an apparatus included in the first access network element, the second access network element, or the access management network element, for example, a chip.

Alternatively, the input/output interface may be a code/data read/write interface circuit or a communication interface. The input/output interface is configured to: receive a computer program or instructions (the computer program or the instructions is/are stored in a memory, and may be directly read from the memory, or may be read through another component) and transmit the computer program or the instructions to the input/output interface, to enable the input/output interface to run the computer program or the instructions, to perform the method according to any one of the foregoing aspects.

Optionally, the communication apparatus may be the chip.

According to an eleventh aspect, a computer program product is provided. The computer program product includes a computer program (which may also be referred to as code or instructions). When the computer program is run, a computer is enabled to perform the method according to any one of the foregoing aspects or the implementations of the foregoing aspects.

According to a twelfth aspect, a computer-readable medium is provided. The computer-readable medium stores a computer program (which may also be referred to as code or instructions). When the computer program is run on a computer, the computer is enabled to perform the method according to any one of the foregoing aspects or the implementations of the foregoing aspects.

According to a thirteenth aspect, a chip system is provided. The chip system includes a processor and an interface, configured to support a communication apparatus in implementing a function provided in any one of the foregoing aspects or the implementations of the foregoing aspects. In a possible design, the chip system further includes a memory, configured to store information and data that are necessary for the communication apparatus. The chip system may include a chip, or may include a chip and another discrete component.

According to a fourteenth aspect, a chip apparatus is provided. The chip apparatus includes an input interface and/or an output interface. The input interface may implement a receiving function provided in any one of the foregoing aspects or the implementations of the foregoing aspects. The output interface may implement a sending function provided in any one of the foregoing aspects or the implementations of the foregoing aspects.

According to a fifteenth aspect, a functional entity is provided. The functional entity is configured to implement the method provided in any one of the foregoing aspects or the implementations of the foregoing aspects.

According to a sixteenth aspect, a communication system is provided, including a first access network element configured to perform the method according to the first aspect and a second access network element configured to perform the method according to the second aspect.

Optionally, the communication system may further include an access management network element that performs the method according to the third aspect.

Optionally, the communication system may further include a terminal device.

For technical effects brought by any one of the second aspect to the sixteenth aspect, refer to the technical effects brought by the first aspect. Details are not described herein again.

### BRIEF DESCRIPTION OF DRAWINGS

FIG. 1 is a schematic diagram of an architecture of a communication system;
FIG. 2 is a schematic diagram of a communication process;
FIG. 3 is a schematic diagram of a communication process according to an embodiment of this application;
FIG. 4 is a schematic diagram of a communication process according to an embodiment of this application;
FIG. 5A and FIG. 5B are a schematic diagram of a communication process according to an embodiment of this application;
FIG. 6A and FIG. 6B are a schematic diagram of a communication process according to an embodiment of this application;
FIG. 7 is a schematic diagram of a structure of a communication apparatus according to an embodiment of this application;
FIG. 8 is a schematic diagram of a structure of a communication apparatus according to an embodiment of this application; and
FIG. 9 is a schematic diagram of a structure of a communication apparatus according to an embodiment of this application.

### DESCRIPTION OF EMBODIMENTS

The following further describes in detail this application with reference to the accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, the word "example" in embodiments of this application is used to represent giving an example, an illustration, or description. Any embodiment or design described as an "example" in this application should not be explained as being more preferred or having more advantages than another embodiment or design. Exactly, the term "example" is used to present a concept in a specific manner.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes some terms in embodiments of this application, to facilitate understanding of a person skilled in the art.
(1) A terminal device in embodiments of this application includes but is not limited to user equipment (user equipment, UE). In a wireless network, the UE is a device having a wireless transceiver function, and may communicate with one or more core network (core network, CN) devices (which may also be referred to as core network elements) via an access network device (which may also be referred to as an access network element) in a radio access network (radio access network, RAN).
   The user equipment may also be referred to as an access terminal, a terminal, a subscriber unit, a subscriber station, a mobile station, a remote station, a remote terminal, a mobile device, a user terminal, a user agent, a user apparatus, or the like. The user equipment may be deployed on land, where the deployment includes an indoor or outdoor deployment, or a handheld or vehicle-mounted deployment, may be deployed on water (for example, on a ship), or may be deployed in air (for example, on aircraft, a balloon, or a satellite). The user equipment may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the user equipment may be a handheld device or a computing device with a wireless communication function, another device connected to a wireless modem, a vehicle-mounted device, a wearable device, an uncrewed aerial vehicle device, a terminal in the internet of things (also referred to as an internet of things device), a terminal in the Internet of Vehicles, any form terminal or relay user equipment in the 5th generation (5th generation, 5G) network or a future network, a terminal in a future evolved public land mobile network (public land mobile network, PLMN), or the like. The relay user equipment may be, for example, a 5G residential gateway (residential gateway, RG). For example, the user equipment may be a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), or a wireless terminal in a smart home (smart home). A type or the like of the terminal device is not limited in embodiments of this application.
(2) A network device is a device that can provide a wireless access function for a terminal. The network device may support at least one wireless communication technology, for example, long term evolution (long term evolution, LTE), new radio (new radio, NR), or wideband code division multiple access (wideband code division multiple access, WCDMA).

For example, the network device may include an access network device (also referred to as an access network element). For example, the network device includes but is not limited to a next-generation base station or a next-generation NodeB (generation NodeB, gNB) in a 5G network, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a mobile switching center, a small cell, and a pico cell. The network device may alternatively be a radio controller, a central unit (central unit, CU), and/or a distributed unit (distributed unit, DU) in a cloud radio access network (cloud radio access network, CRAN) scenario. Alternatively, the network device may be a relay station, an access point, a vehicle-mounted device, a terminal, a wearable device, a network device in future mobile communication, a network device in a future evolved PLMN, or the like.

For another example, the network device may include a core network (CN) device, and the core network device has, for example, an access and mobility management function (access and mobility management function, AMF).

(3) A status of a terminal device includes a connected state and an idle state. In an LTE system, after the terminal device accomplishes camping on a cell, it may be considered that the terminal device enters the idle (IDLE) state. If the terminal device subsequently accomplishes a random access process, it may be considered that the terminal device enters the connected (CONNECTED) state.

In the 3GPP, many features are defined for the terminal device, in particular, for an internet of things device, and one of the features is energy saving. The terminal device may save energy in many manners, and in one manner, the terminal enters a suspended state (suspended state). The suspended state is a suspended idle state, for example, includes a connection management idle state with suspend (connection management-IDLE with Suspend, CM-IDLE with Suspend) state, a radio resource control idle state with suspend (radio resource control IDLE with Suspend, RRC IDLE with Suspend) state, or a 5G core network mobility management (5GS mobility management, 5GMM) idle mode with a suspend indication (5GMM-IDLE mode with suspend indication).

(4) In ephemeris (Ephemeris) information, an ephemeris is a precise location or track table that is of a celestial body and that changes with time in global positioning system (global positioning system, GPS) measurement, and is a function of time. The ephemeris may also be referred to as an ephemeris table, an ephemeris, an almanac, or the like. A satellite ephemeris may be used to determine a running status of a flying object, like time, a location, or a speed at any moment.

Term "and/or" in this application describes an association relationship for describing associated objects and represents that three relationships may exist. For example, A and/or B may represent the following three cases: Only A exists, both A and B exist, and only B exists. A character "/" generally indicates an "or" relationship between the associated objects.

"A plurality of" in this application means two or more.

In addition, it should be understood that in description of this application, terms such as "first" and "second" are merely used for distinguishing and description, but should not be understood as indicating or implying relative importance, or should not be understood as indicating or implying a sequence.

The technical solutions in embodiments of this application may be applied to a mobile communication system. For example, the mobile communication system may be a fourth generation (4th Generation, 4G) communication system (for example, an LTE system), a worldwide interoperability for microwave access (worldwide interoperability for microwave access, WiMAX) communication system, a 5G communication system (for example, an NR system), or a future mobile communication system like 6G. Alternatively, the technical solutions in embodiments of this application may be applied to a satellite communication system, and the satellite communication system may be integrated with the mobile communication system.

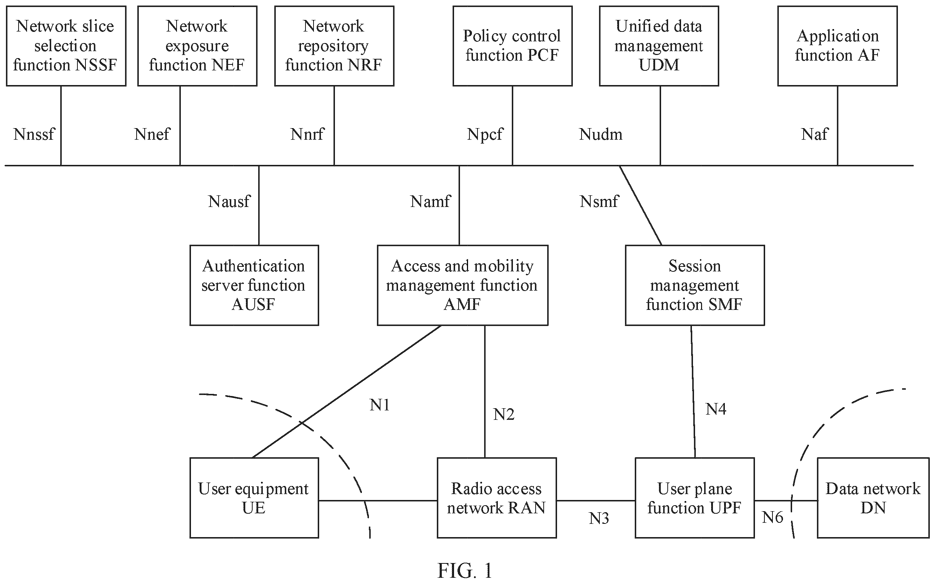

The 3GPP standard group formulated a next-generation mobile communication network architecture (next generation system), which is referred to as a 5G network architecture. FIG. 1 is a schematic diagram of the 5G network architecture, including a terminal device part, a network device part, and a data network (data network, DN) part.

The network device part includes a network exposure function (network exposure function, NEF), a network repository function (network repository function, NRF), a policy control function (policy control function, PCF), a unified data management function (unified data management, UDM), an authentication server function (authentication server function, AUSF), an AMF, a session management function (session management function, SMF), a user plane function (user plane function, UPF), an access network (access network, AN), a network slice selection function (network slice selection function, NSSF), and the like. In the foregoing network device, a part other than an access network part may be referred to as a core network part.

The core network part includes the user plane function and a control plane function. The user plane function is mainly responsible for forwarding a data packet, controlling quality of service (quality of service, QoS), collecting charging information, and the like. The control plane function is mainly responsible for service procedure interaction, and delivering a data packet forwarding policy, a QoS control policy, and the like to a user plane.

A data network DN may also be referred to as a packet data network (packet data network, PDN), and may usually be deployed outside an operator network, for example, a third party network. For example, the operator network may access a plurality of DNs, and a plurality of services may be deployed in the DNs, to provide services such as a data service and/or a voice service for UE. The third party may be a service party other than the operator network and the UE, and may provide the services such as a data service and/or a voice service for the UE. A specific representation form of the third party may be specifically determined based on an actual application scenario, and is not limited herein.

An application function (application function, AF) may or may not belong to the operator network. Generally, the AF belongs to the third party rather than the operator network, but has a protocol relationship with the operator network. The AF is used to provide a function network element configured to provide various services, and may support a function of affecting data routing by using an application, accessing the network exposure function NEF, interaction with a policy framework to perform policy control, and the like.

For example, the following briefly describes network functions in the operator network.

A RAN is a sub-network of the operator network, and is an implementation system between a service node (or a network function) in the operator network and the UE. To access the operator network, the UE first passes through the RAN, and then is connected to the service node in the operator network through the RAN. To be specific, the RAN exists between the UE and the core network part, and provides a communication connection between the UE and the core network part. The RAN in embodiments of this application may be the access network, or may be an access network element. This is not distinguished herein. The access network element is a device that provides a wireless communication function for the UE, and may also be referred to as an access network device, an AN device, or the like. The access network element includes but is not limited to, a gNB in a 5G system, an eNB, an RNC, an NB, a base station controller BSC, a BTS, an HNB, a BBU, a TRP, a TP, a small cell base station device (pico), a mobile switching center in an LTE system, or a network device in a future network, or the like. It may be understood that a specific type of the access network device is not limited in this application. In systems using different radio access technologies, devices with functions of the access network device may have different names.

Optionally, in some deployments of the access device, the access device may include a CU, a DU, and the like.

The NEF is a control plane function provided by an operator, and provides a framework, authentication, and an interface that are related to network capability exposure and performs information transmission between a network function in the 5G system and another network function. The NEF exposes an external bidirectional interface of a network capability to the third party in a secure manner. When the another network function (like the AF) needs to communicate with a third party network, the NEF may serve as a relay for communication with a third party network entity. The NEF may also translate identification information of a subscriber and identification information of a third party network function. For example, when sending a subscriber permanent identifier (subscriber permanent identifier, SUP I) of the subscriber from a PLMN to the third party, the NEF may translate the SUPI into a corresponding generic public subscription identifier (generic public subscription identifier, GPSI). On the contrary, the NEF forwards external information to the PLMN, to prevent another network function in the PLMN from directly contacting an external network.

The NRF is a control plane function provided by the operator and can be used to maintain real-time information of all network function services in a network.

The PCF is a control plane function provided by the operator, and is used to: generate and manage a subscriber, a session, and a QoS flow processing policy. The PCF supports a unified policy framework to govern network behavior and provides policy rules for other control functions, policy decision-related subscription information, and the like.

The UDM is a control plane function provided by the operator and is responsible for storing information such as a security context (security context) and subscription data of a subscriber in the PLMN. The subscriber in the operator network may be specifically a user using a service provided by the operator network, for example, a user using a terminal device SIM card of China Telecom, or a user using a terminal device SIM card of China Mobile. For example, the security context may be data (cookie), a token (token), or the like stored in a local terminal device (for example, a mobile phone). The subscription data of the subscriber may be a supporting service of the terminal device SIM card, for example, a traffic package of the mobile phone SIM card.

The AUSF is a control plane function provided by the operator, and is usually used for primary authentication, namely, network authentication between the UE (subscriber) and the operator network.

The AMF is a control plane network function provided by the operator network, and is responsible for access control and mobility management for accessing the operator network by the UE, for example, functions such as registration management, connection management, reachability management, and mobility management, temporary user identity allocation, and user authentication and authorization.

The SMF is a control plane network function provided by the operator network, and is responsible for managing a protocol data unit (protocol data unit, PDU) session of the UE. The PDU session is a channel for transmitting a PDU, and the terminal device needs to communicate data with the DN by using the PDU session. The SMF may be responsible for establishment, maintenance, deletion, and the like of the PDU session. The SMF includes functions related to a session, for example, session management (for example, session establishment, modification, and release, including tunnel maintenance between the UPF and the AN), selection and control of the UPF, service and session continuity (service and session continuity, SSC) mode selection, and roaming.

The UPF is a gateway provided by the operator and a gateway for communication between the operator network and the DN. The UPF includes user plane-related functions such as data packet routing and transmission, packet detection, service usage reporting, QoS processing, lawful interception, uplink packet detection, and downlink data packet storage.

The NSSF is a control plane network function provided by the operator network, and is responsible for determining a network slice instance, selecting an AMF, and the like.

In FIG. 1, Nnef, Nausf, Nnrf, Npcf, Nudm, Naf, Namf, Nsmf, Nnssf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that names of network functions and names of interfaces between the network functions in FIG. 1 are merely an example. In a specific implementation, the interface names of the system architecture may alternatively be other names. This is not limited in this application.

Satellite communication is an important part of a next-generation communication technology, and can supplement a scenario that cannot be covered by a terrestrial network, like a desert or ocean. A possible deployment manner in the satellite communication is that the access network device is deployed on a satellite. Specifically, a part or all of the access network element may be deployed on the satellite. In other words, the terminal device accesses the network through the satellite, which is similar to that the terminal device accesses the network through a ground base station.

Internet of things devices have features such as a large quantity, low power consumption, wide distribution, and low mobility, and are widely connected to the network. In some remote areas, especially areas without covering by the terrestrial network, the internet of things devices also need to access the network. In these areas, the internet of things devices can access the network through the satellite.

An energy saving feature is defined for the internet of things device in the 3GPP. The internet of things device can enter a suspended state to save energy. The suspended state is a suspended idle state. When the internet of things device enters an idle state, the access network device stores access stratum information (AS information) of the internet of things device, information about an association between an NGAP (providing a signaling service between the access network device and an access management function) and the internet of things device, a PDU session context associated with the internet of things device, and the like.

The internet of things device and the access network element can quickly recover a connection by using the stored information, and enter a connection state. Compared with a common connection recovery procedure in the idle state, a quick connection recovery procedure reduces signaling interaction, to implement energy saving. Herein, information stored in the access network element is referred to as a context, and is used to quickly recover the connection for the internet of things device in the suspended state.

Due to reason like relative movement between the internet of things device and the access network element that serves the internet of things device, for example, the access network element that currently serves the internet of things device cannot continue to serve the internet of things device, but a new access network element serves the internet of things device. Herein, the access network element that previously serves the internet of things device is referred to as a source access network element, and the new access network element is referred to as a target access network element.

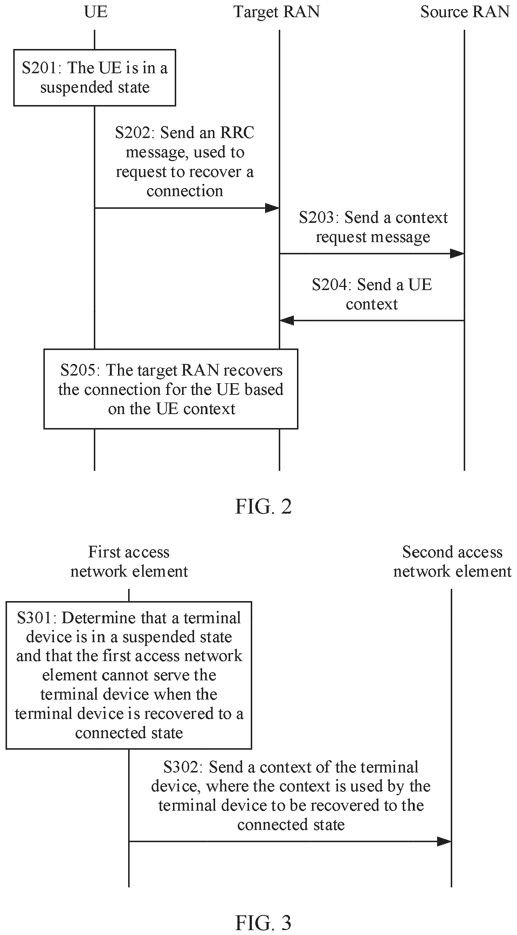

As shown in FIG. 2, a procedure in which an internet of things device requests to recover a connection includes the following steps:
S201: UE is in a suspended state.

The UE may be the foregoing internet of things device.

S202: The UE sends a radio resource control (radio resource control, RRC) message to a target RAN, where the RRC message is used to request to recover a connection.

The RAN may be the foregoing access network element.

S203: The target RAN sends a context request message to a source RAN, used to request a UE context.

S204: The source RAN sends the UE context to the target RAN.

S205: The target RAN recovers the connection for the UE based on the UE context.

When the UE requests to recover the connection, if a RAN that serves the UE does not change, the RAN directly recovers the connection for the UE. If a RAN that serves the UE changes, a changed target RAN requests the UE context from the source RAN, to recover the connection for the UE. Refer to S202 to S205.

Because the UE moves, or a satellite moves when the RAN is deployed on the satellite, a distance between the target RAN and the source RAN may be long, a delay of querying the context by the target RAN from the source RAN is excessively long, and the UE context cannot be queried in time. Consequently, the UE needs to recover the connection based on a normal access procedure, and an energy saving requirement cannot be met.

Based on this, an embodiment of this application provides a communication method. The communication method is applicable to the network architecture shown in FIG. 1. FIG. 3 is a schematic diagram of a communication method according to an embodiment of this application. The method may include the following steps.

S301: A first access network element determines that a terminal device is in a suspended state and that the first access network element cannot serve the terminal device when the terminal device is recovered to a connected state.

The first access network element (or a functional component of the first access network element) may be partially or all deployed on a satellite, or the first access network element (or a functional component of the first access network element) may be partially or all deployed on the ground.

The first access network element is a source access network element.

S302: The first access network element sends a context of the terminal device to a second access network element, where the context is used by the terminal device to be recovered to the connected state. Correspondingly, the second access network element receives the context of the terminal device.

The second access network element (or a functional component of the second access network element) may be partially or all deployed on the satellite, or the second access network element (or a functional component of the second access network element) may be partially or all deployed on the ground.

The second access network element may be configured to serve the terminal device when the terminal device is recovered to the connected state, that is, the second access network element is a target access network element. Alternatively, the second access network element may be configured to directly or indirectly send the context to a third access network element that serves the terminal device when the terminal device is recovered to the connected state, that is, the third access network element is a target access network element.

Based on the foregoing solution, when determining that the terminal device is in the suspended state and that the first access network element cannot subsequently serve the terminal device, the first access network element may actively send the context of the terminal device to the second access network element. This can ensure that the target access network element obtains the context in time, to quickly recover a connection for the terminal device and implement energy saving.

The first access network element is an access network element that serves the terminal device. Therefore, when or after the terminal device enters the suspended state from the connected state, the first access network element may determine that the terminal device is in the suspended state.

In an implementation, in S301, the first access network element may determine, based on one or more pieces of information such as ephemeris information, expected behavior information of the terminal device (Expected UE Behavior), a new radio condition (new radio condition), load balancing information, or a service type, that the first access network element cannot serve the terminal device when the terminal device is recovered to the connected state.

The ephemeris information may include a mapping relationship between a satellite and an access network element, to indicate location information of an access network element deployed on the satellite at a moment. The expected behavior information of the terminal device may include wake-up period information of the terminal device, to indicate duration from a time point at which the terminal device enters the suspended state to a time point at which the terminal device requests to recover the connection. The new radio condition indicates signal strength caused by a coverage condition of the first access network element. The load balancing information indicates a quantity of terminal devices that access a network by using the first access network element. The service type indicates a service type or a session type existing when the terminal device enters the suspended state, for example, a voice service.

There may be one or more terminal devices. In an example, the first access network element may determine that a plurality of terminal devices are in the suspended state and that the first access network element cannot serve the plurality of terminal devices when the plurality of terminal devices are recovered to the connected state.

The context of the terminal device is used by the terminal device in the suspended state to be recovered to the connected state, that is, used by the terminal device to quickly recover the connection. The context of the terminal device may include but is not limited to one or more of the following: access stratum information of the terminal device, information about an association between an NGAP and the terminal device, a PDU session context associated with the terminal device, and the like. The access stratum information of the terminal device is context information of the terminal device between the terminal device and the first access network element, the information about an association between the NGAP and the terminal device is context information of the terminal device between the first access network element and an access management network element, and the PDU session context associated with the terminal device is context information of a PDU session of the terminal device.

In an implementation, before S302, the first access network element may determine, based on one or more pieces of information such as ephemeris information, expected behavior information of the terminal device, a new radio condition, load balancing information, or a service type, an access network element that serves the terminal device when the terminal device is recovered to the connected state, that is, determine the target access network element. For example, the first access network element may determine the target access network element after S301 and before S302.

S302 is applicable to the following possible scenarios.

Scenario 1: The first access network element is the source access network element, the second access network element is the target access network element, and the second access network element may obtain the context of the terminal device from the first access network element. The source access network element is an access network element that serves the terminal device when the terminal device enters the suspended state or before the terminal device requests to recover the connection, and the target access network element is an access network element that can serve the terminal device when the terminal device is recovered to the connected state.

Optionally, the first access network element may determine, based on the one or more pieces of information such as the ephemeris information, the expected behavior information of the terminal device, the new radio condition, the load balancing information, or the service type, that the target access network element (the second access network element in Scenario 1) can obtain the context of the terminal device from the first access network element, and/or that duration for obtaining the context from the first access network element does not exceed first duration. In this case, it may be considered that Scenario 1 is met. The first duration is a positive number, and setting of the first duration is not limited in embodiments of this application.

For example, in S302, the first access network element may send a transmission context request message to the second access network element, where the transmission context request message includes the context of the terminal device. The second access network element may receive the transmission context request message, and store the context included in the transmission context request message. Correspondingly, the second access network element may send a context response message to the first access network element, where the context response message may be used to acknowledge that the second access network element has received and/or stored the context. For example, the context response message may be a transmission context acknowledgment message.

Optionally, the first access network element may further send, to the second access network element, time information of entering the suspended state by the terminal device and/or hop count information. The hop count information indicates an accumulated quantity of times that the context is transferred between access network elements in a time period from the time point at which the terminal device enters the suspended state to a current time point.

Optionally, in a first case, the first access network element may further delete the context of the terminal device. The first case includes one or more of the following: Duration in which the terminal device is in the suspended state exceeds second duration, an accumulated quantity of times indicated by the hop count information exceeds a first quantity of times, duration after the first access network element sends the context exceeds third duration, or the first access network element receives the context response information, where the context response message is used by the second access network element to indicate that the context is received and/or stored. The second duration, the first quantity of times, and the third duration are positive numbers. Setting of the second duration, the first quantity of times, and the third duration is not limited in this application. For example, in Scenario 1, after receiving the context response message, the first access network element deletes the context of the terminal device. It may be understood that a deletion condition shown in the first case is also applicable to the following Scenario 2 and Scenario 3. In Scenario 2, the context response message may indicate that the access management network element receives and/or stores the context.

Optionally, in a second case, the second access network element may further delete the context of the terminal device. The second case includes one or more of the following: Duration in which the terminal device is in the suspended state exceeds fourth duration, or an accumulated quantity of times indicated by hop count information exceeds a second quantity of times. The fourth duration and the second quantity of times are positive numbers, the fourth duration and the second duration may be the same or different, and the second quantity of times and the first quantity of times may be the same or different. Setting of the fourth duration and the second quantity of times is not limited in this application.

When the duration in which the terminal device is in the suspended state exceeds the second duration (or the fourth duration), or the accumulated quantity of times indicated by the hop count information exceeds the first quantity of times (or the second quantity of times), it may be considered that the terminal device has been in the suspended state for a period of time. However, the connection may not be recovered based on an expected behavior of the terminal device due to a reason like a power failure of the terminal device. If the first access network element (or the second access network element) continues to store the context of the terminal device, a storage burden may be caused, and energy saving may not be considered in this special case. Therefore, the first access network element (or the second access network element) may delete the stored context of the terminal device.

Scenario 2: The first access network element is the source access network element, the second access network element is the target access network element, and the second access network element cannot obtain the context of the terminal device from the first access network element.

Optionally, the first access network element may determine, based on the one or more pieces of information such as the ephemeris information, the expected behavior information of the terminal device, the new radio condition, the load balancing information, or the service type, that the target access network element (the second access network element in Scenario 2) cannot obtain the context of the terminal device from the first access network element, and/or that duration for obtaining the context from the first access network element exceeds first duration. In this case, it may be considered that Scenario 2 is met.

For example, in S302, the first access network element sends a container to the access management network element, where the container includes the context sent by the first access network element to the access network element (the second access network element in Scenario 2) that serves the terminal device when the terminal device is recovered to the connected state. Correspondingly, the access management network element receives the container, stores the container, and sends the container to the second access network element. The second access network element receives the container. In a transmission process, content included in the container are not decrypted by a network element on a path. This helps ensure information security.

Optionally, after receiving or sending the container, the access management network element starts a timer, and deletes the stored container when the timer expires, so that a storage burden of the access management network element can be reduced. Duration of the timer is a positive number, and the timer may be counting up or countdown. Setting of the timer is not limited in this application.

In an implementation, before the access management network element sends the container to the second access network element, the second access network element sends context request indication information to the access management network element, where the context request indication information is used to request the context of the terminal device. Correspondingly, the access management network element receives the context request indication information. Optionally, the context request indication information is included in a handover request message. After receiving the handover request message, the access management network element may further trigger a session management network element to activate a user plane resource for a session of the terminal device. Correspondingly, the container may be included in the handover response message.

In a possible implementation, the terminal device sends a request message to the second access network element, and the second access network element receives the request message. The request message is used to request to recover the connection. The second access network element determines that the context of the terminal device cannot be obtained from the first access network element. The second access network element sends the context request indication information to the access management network element, to obtain the context from the access management network element. For example, when determining that the context of the terminal device cannot be obtained from the first access network element, the second access network element may determine, based on one or more pieces of information of duration in which the terminal device is in the suspended state, the ephemeris information, or hop count information, that the context cannot be obtained from the first access network element. Optionally, the second access network element may further receive time information of entering the suspended state by the terminal device and/or the hop count information.

In another implementation, before the access management network element sends the container to the second access network element, the access management network element determines, based on the ephemeris information and/or the expected behavior information of the terminal device, that the terminal device is to recover the connection, and/or determines the second access network element that serves the terminal device when the terminal device is recovered to the connected state, and the access management network element sends the context (or the container including the context) to the second access network element. Optionally, in this implementation, before the second access network element sends the context request indication information, the access management network element sends the context (or the container including the context) to the second access network element.

For the second access network element, the second access network element may configure an RRC connection based on the received container. After configuration is accomplished, the terminal device enters the connected state, and recovers the connection.

Scenario 3: The first access network element is the source access network element, the second access network element is not the target access network element, and the third access network element is the target access network element, where the second access network element is configured to directly or indirectly send the context to the target access network element.

After receiving the context, the second access network element may determine that the terminal device is in the suspended state and that the second access network element cannot serve the terminal device when the terminal device is recovered to the connected state, and the second access network element sends the context to the third access network element. For a processing process of the first access network element and the second access network element, refer to a processing process of the first access network element in Scenario 1. For a processing process of the third access network element, refer to a processing process of the second access network element in Scenario 1. No repeated description is provided.

In a possible case, the third access network element is not the target access network element either. After receiving the context, the third access network element continues to directly or indirectly send the context to the target access network element.

In an actual communication process, some or all of Scenarios 1, 2, and 3 may coexist. In other words, when no conflict occurs, solutions of Scenarios 1, 2, and 3 may be separately used or used in combination on the basis of implementing energy saving.

It should be noted that, if the first access network element (or the second access network element) deletes the context or the container, when the terminal device requests to recover the connection by using the first access network element (or the second access network element), the terminal device may establish the context after interacting with the first access network element (or the second access network element), and then recover the connection based on the established context. Alternatively, if the access management network element deletes the container, when the terminal device requests to recover the connection by using the target access network element, and the target access network element does not store the context or the container, the terminal device may establish the context after interacting with the target access network element, and then recover the connection based on the established context.

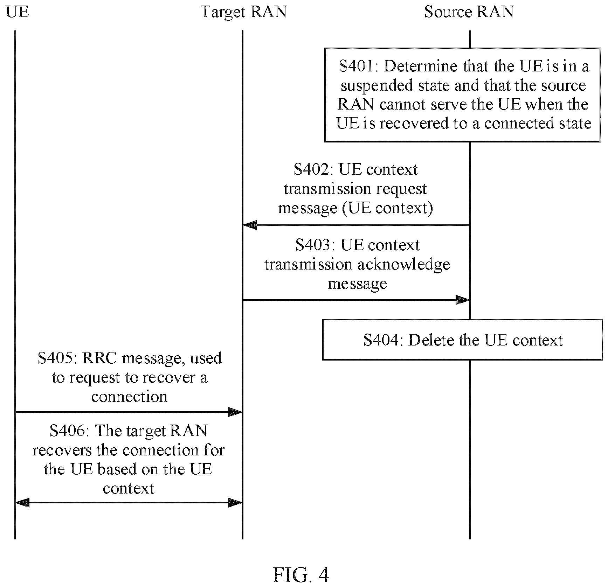

The following describes Scenario 1/Scenario 3 with reference to a specific example. FIG. 4 is an example diagram of a communication process. In the communication process, a source RAN serves UE before a terminal device requests to recover a connection, and a target RAN serves the UE when the terminal device is recovered to a connected state. The following steps are included.

S401: The source RAN determines that the UE is in a suspended state and that the source RAN cannot serve the UE when the UE is recovered to the connected state.

An example of the source RAN is the foregoing first access network element.

For S401, refer to S301. No repeated description is provided.

In an implementation, the source RAN determines that a plurality of UEs are in the suspended state and that the source RAN cannot serve the plurality of UEs when the plurality of UEs are recovered to the connected state.

S402: The source RAN sends a UE context transmission request message to the target RAN, and the target RAN receives the UE context transmission request message, where the UE context transmission request message includes a UE context.

An example of the target RAN is the foregoing second access network element.

In an implementation, the UE context transmission request message includes a plurality of UE contexts.

Optionally, the UE context transmission request message further includes time information of entering the suspended state by the UE.

Optionally, the UE context transmission request message further includes hop count information.

S403: The target RAN sends a UE context transmission acknowledgment message to the source RAN, and the source RAN receives the UE context transmission acknowledgment message.

The UE context transmission acknowledge message is used to acknowledge that the UE context is received and/or stored.

In a possible scenario, before the UE requests to recover the connection, the target RAN may determine that the UE is in the suspended state and that the target RAN cannot serve the UE when the UE is recovered to the connected state. In this case, the target RAN serves as the source RAN and sends the UE context to a next target RAN (for example, the foregoing third access network element), namely, Scenario 3.

In an implementation, when the target RAN determines that the UE is in the suspended state and that the target RAN cannot serve the UE when the UE is recovered to the connected state, and duration in which the terminal device is in the suspended state (which is duration from a current time point to a time point at which the UE enters the suspended state) exceeds fourth duration, the target RAN no longer sends the UE context to the next target RAN, and deletes the stored UE context, to reduce a storage burden of the target RAN.

In another implementation, when the target RAN determines that the UE is in the suspended state and that the target RAN cannot serve the UE when the UE is recovered to the connected state, and an accumulated quantity of times indicated by the hop count information exceeds a second quantity of times, the target RAN no longer sends the UE context to the next target RAN, and deletes the stored UE context, to reduce a storage burden of the target RAN.

S404: The source RAN deletes the UE context.

S404 is an optional step. For example, after determining that the UE context transmission acknowledgment message is received, the source RAN deletes the stored UE context.

S405: The UE sends an RRC message to the target RAN, and the target RAN receives the RRC message, where the RRC message is used to request to recover the connection.

It should be noted that the target RAN in S405 and S406 is the RAN that serves the UE when the terminal device is recovered to the connected state. The target RAN in S405 and S406 may be the target RAN or the next target RAN in S403.

Optionally, the RRC message includes network identification information, and the network identification information indicates the source RAN (that stores the UE context).

Optionally, the RRC message includes the time information of entering the suspended state by the UE.

Optionally, the RRC message includes identification information of the UE, for example, an inactive radio network temporary identifier (inactive-radio network temporary identifier, I-RNTI).

S406: The target RAN recovers the connection for the UE based on the UE context.

The target RAN configures an RRC connection based on the UE context. After configuration is accomplished, the UE enters the connected state and recovers the connection.

It may be understood that, on a premise that energy saving can be implemented, an execution sequence of the foregoing steps is not limited, and the foregoing steps may be sent simultaneously, or may be performed in a sequence.

In this example, as the UE moves or as the RAN that serves the UE moves, the source RAN sends the UE context to the target RAN, to ensure that the RAN that serves the UE stores the UE context at any moment, and the UE can quickly recover the connection at any time.

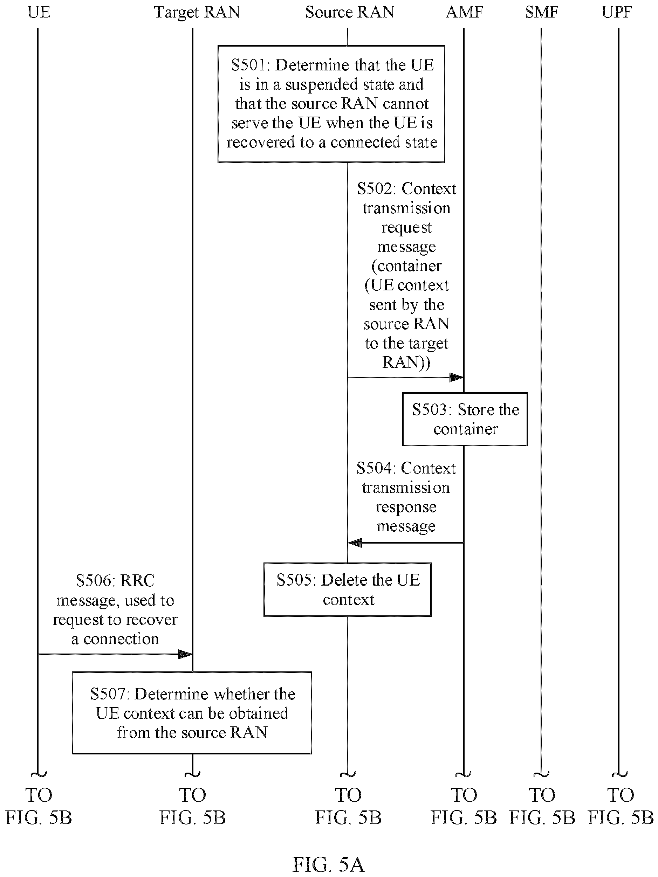

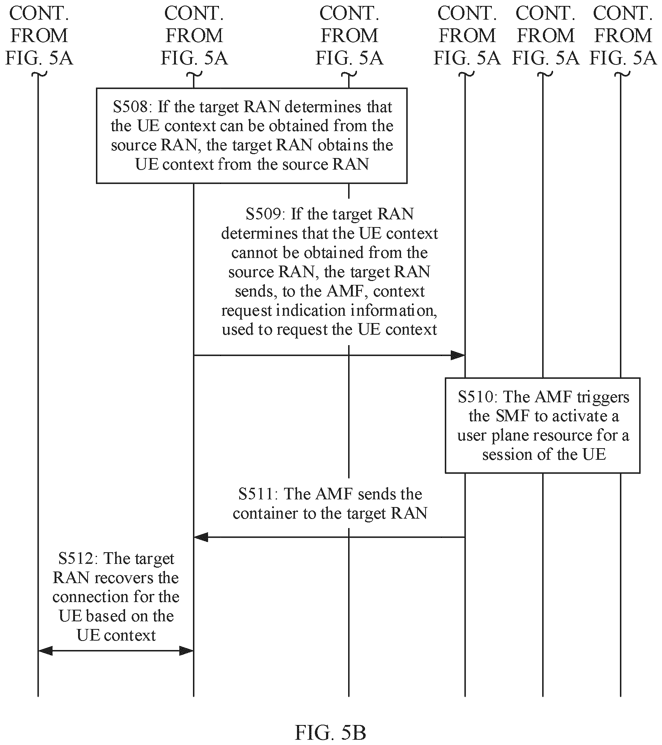

The following describes Scenario 2 with reference to a specific example. FIG. 5A and FIG. 5B are an example diagram of a communication process. In the communication process, a source RAN serves UE before a terminal device requests to recover a connection, and a target RAN serves the UE when the terminal device is recovered to a connected state. The following steps are included.

S501: The source RAN determines that the UE is in a suspended state and that the source RAN cannot serve the UE when the UE is recovered to the connected state.

In an implementation, the source RAN determines, based on ephemeris information and/or expected behavior information of the UE, that the source RAN cannot serve the UE when the UE is recovered to the connected state, and estimates that a target UE that serves the RAN when the UE requests to be recovered to the connected state cannot obtain a UE context from the source RAN. For example, the target RAN is far away from the source RAN. Consequently, the target RAN cannot connect to the source RAN, and the target RAN cannot obtain the UE context from the source RAN. For another example, the target RAN and the source RAN may be connected in a multi-hop mode, but a delay is excessively long. As a result, the target RAN cannot obtain the UE context from the source RAN in time.

Optionally, the source RAN may determine that the source RAN cannot serve a plurality of UEs when the plurality of UEs are recovered to the connected state, and estimates that the target RAN that serves the plurality of UEs when the plurality of UEs request to be recovered to the connected state cannot obtain contexts of the plurality of UEs from the source RAN. The target RAN serves the plurality of UEs.

S502: The source RAN sends a context transmission request message to an AMF, and the AMF receives the context transmission request message, where the context transmission request message includes a container, and the container includes the UE context sent by the source RAN to the target RAN.

In an implementation, the container includes the contexts of the plurality of UEs sent by the source RAN to the target RAN.

S503: The AMF stores the container.

Optionally, after receiving the container, the AMF starts a timer, and deletes the stored container when the timer expires, to reduce a storage burden of the AMF.

S504: The AMF sends a context transmission response message to the source RAN, and the source RAN receives the context transmission response message, where the context transmission response message is used to acknowledge that the context transmission request message is received.

In an implementation, the context transmission response message is further used to acknowledge that the container is stored.

S505: The source RAN deletes the UE context.

In an implementation, the source RAN receives the context transmission response message, and deletes the UE context.

In another implementation, after receiving the context transmission response message, the source RAN starts the timer, and deletes the UE context when the timer expires.

Optionally, the source RAN deletes the contexts of the plurality of UEs.

S506: The UE sends an RRC message to the target RAN, and the target RAN receives the RRC message, where the RRC message is used to request to recover the connection.

Optionally, the RRC message includes network identification information, and the network identification information indicates the source RAN.

Optionally, the RRC message includes time information of entering the suspended state by the UE.

Optionally, the RRC message includes an I-RNTI of the UE.

S507: The target RAN determines whether the UE context can be obtained from the source RAN.

In an implementation, the target RAN may determine, based on the time information of entering the suspended state by the UE and/or the ephemeris information, that the UE context can be obtained from the source RAN, or that the UE context cannot be obtained from the source RAN. For example, the target RAN is far away from the source RAN. Consequently, the target RAN cannot connect to the source RAN, and the target RAN cannot obtain the UE context from the source RAN. For another example, the target RAN and the source RAN may be connected in a multi-hop mode, but a delay is excessively long. As a result, the target RAN cannot obtain the UE context from the source RAN in time.

S508: If the target RAN determines that the UE context can be obtained from the source RAN, the target RAN obtains the UE context from the source RAN.

In an implementation, the target RAN queries the source RAN for the UE context. If the source RAN does not provide the UE context, the target RAN requests the UE context from the AMF.

S509: If the target RAN determines that the UE context cannot be obtained from the source RAN, the target RAN sends context request indication information to the AMF, where the context request indication information is used to request the UE context.

In an implementation, the context request indication information is included in a handover request message.

In another implementation, the target RAN sends a context request message to the AMF, where the context request message indicates to request the context.

S510: The AMF triggers an SMF to activate a user plane resource for a session of the UE.

S510 is an optional step.

In an implementation, when receiving the handover request message, the AMF triggers the SMF to activate the user plane resource for the session of the UE.

S511: The AMF sends the container to the target RAN, and the target RAN receives the container.

In an implementation, the AMF sends the container to the target RAN by using a handover response message.

S512: The target RAN recovers the connection for the UE based on the UE context.

It may be understood that, on a premise that energy saving can be implemented, an execution sequence of the foregoing steps is not limited, and the foregoing steps may be sent simultaneously, or may be performed in a sequence.

In this example, the source RAN sends the UE context to the AMF, and the AMF stores the UE context. When the UE requests to recover the connection, the target RAN requests the UE context from the AMF. The UE can quickly recover the connection at any time. Compared with that in FIG. 4, the UE or the RAN that serves the UE does not need to perform transmission on the UE context each time movement.

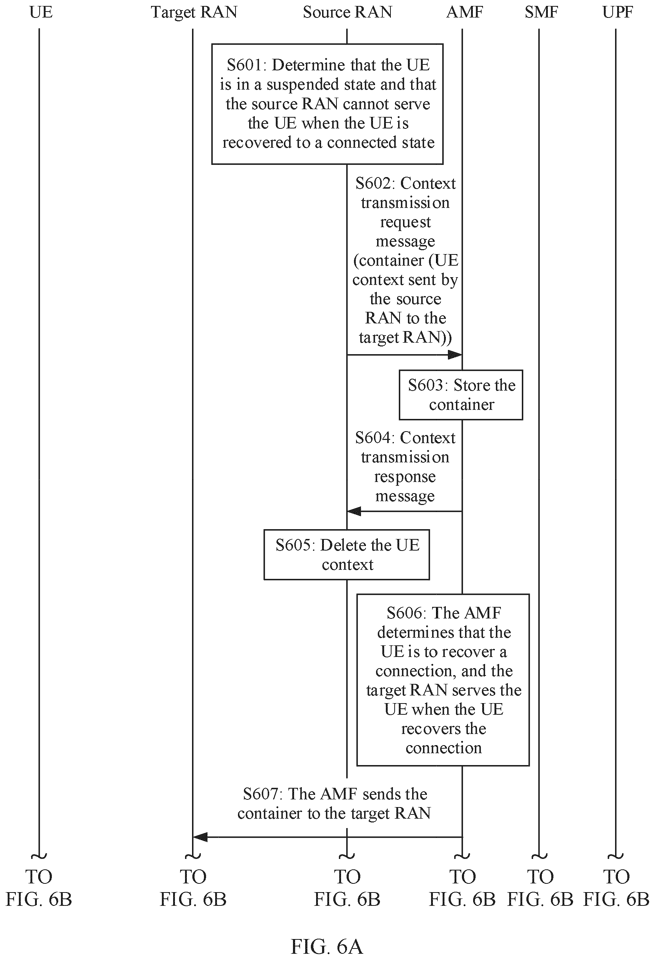

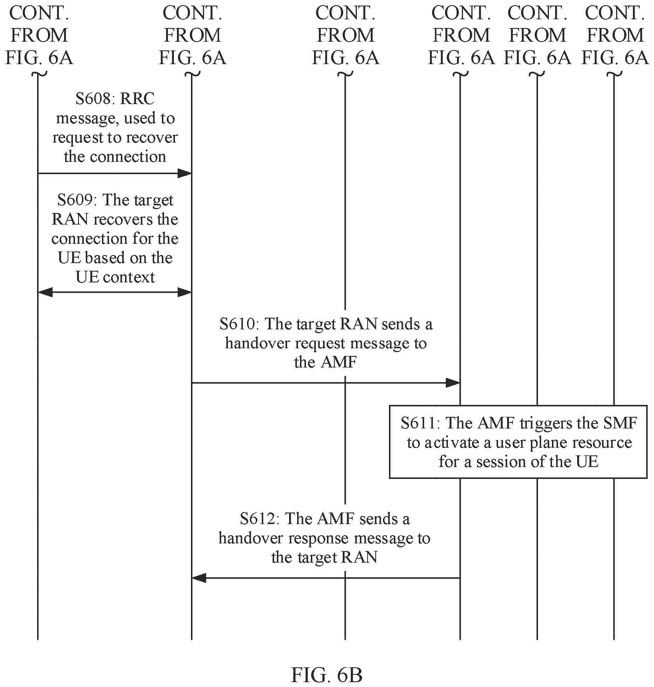

The following describes Scenario 2 with reference to a specific example. FIG. 6A and FIG. 6B are an example diagram of a communication process. In the communication process, a source RAN serves UE before a terminal device requests to recover a connection, and a target RAN serves the UE when the terminal device is recovered to a connected state. The following steps are included.

For a process of S601 to S605, refer to S501 to S505.

S606: An AMF determines that the UE is to recover the connection, and the target RAN serves the UE when the UE recovers the connection.

The AMF is the foregoing access management network element.

S607: The AMF sends a container to the target RAN, and the target RAN receives the container.

In an implementation, after sending the container, the AMF starts a timer, and deletes a UE context when the timer expires.

In an implementation, the AMF determines, based on expected behavior information of the UE and the like, that the UE is to recover the connection, and the AMF determines, based on the expected behavior information of the UE, ephemeris information, and/or the like, that an access network element that serves the UE when the UE recovers the connection is the target RAN.

S608: The UE sends an RRC message to the target RAN, and the target RAN receives the RRC message, where the RRC message is used to request to recover the connection.

In an implementation, the target RAN does not store the UE context, that is, the target RAN determined by the AMF is not a RAN that serves the UE when the UE recovers the connection. In this case, the target RAN requests the UE context from the AMF (for example, the context request indication information in S509).

If the AMF deletes the container, the UE and the target access network element re-establish a context through interaction, and then recover the connection based on the re-established context.

S609: The target RAN recovers the connection for the UE based on the UE context.

In an implementation, the target RAN sends the RRC message to the UE, and the UE receives the RRC message. The RRC message is used to configure an RRC connection, to recover the connection for the UE.

S610: The target RAN sends a handover request message to the AMF, and the AMF receives the handover request message.

S611: The AMF triggers an SMF to activate a user plane resource for a session of the UE.

In an implementation, after receiving the handover request message, the AMF triggers the SMF to activate the user plane resource for the session of the UE. S611 is an optional step.

S612: The AMF sends a handover response message to the target RAN, and the target RAN receives the handover response message.

It may be understood that, on a premise that energy saving can be implemented, an execution sequence of the foregoing steps is not limited, and the foregoing steps may be sent simultaneously, or may be performed in a sequence.

In this example, the source RAN sends the UE context to the AMF for storage. The AMF sends the UE context to the target RAN before the UE requests to recover the connection. The UE context is stored in the target RAN in advance, and the UE can quickly recover the connection at any time. Compared with that in FIG. 5A and FIG. 5B, the target RAN does not need to request the UE context from the AMF.

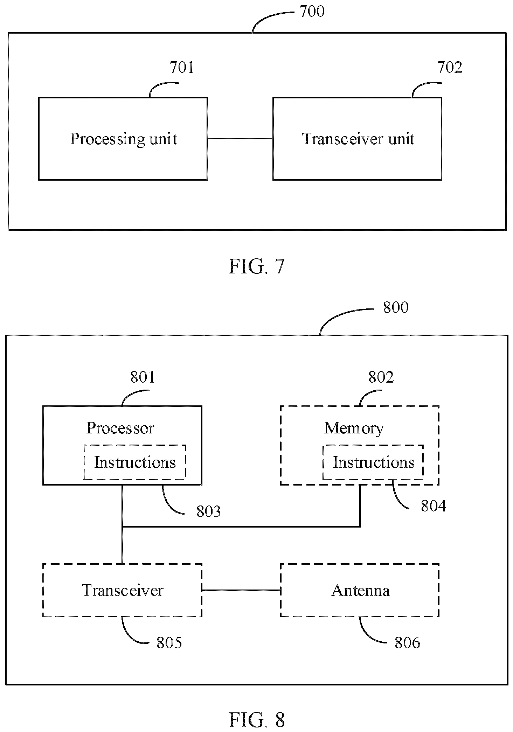

Based on a same technical concept as the foregoing communication method, an embodiment of this application further provides a communication apparatus. As shown in FIG. 7, a communication apparatus 700 includes a processing unit 701 and a transceiver unit 702. Optionally, a function implemented by the transceiver unit 702 may be implemented by a communication interface, and the transceiver unit may include a receiving unit and/or a sending unit. The apparatus 700 may be used in a first access network element, a second access network element, or an access management network element, or may be located in the first access network element, the second access network element, or the access management network element. The communication apparatus 700 may be configured to implement the methods described in the foregoing method embodiments. For example, the communication apparatus 700 can perform the steps performed by the first access network element, the second access network element, or the access management network element in the methods in FIG. 3 to FIG. 6A and FIG. 6B.

In a possible embodiment, the apparatus 700 is used in the first access network element.

For example, the processing unit 701 is configured to determine that a terminal device is in a suspended state and that the apparatus 700 cannot serve the terminal device when the terminal device is recovered to a connected state; and the transceiver unit 702 is configured to send a context of the terminal device to the second access network element, where the context is used by the terminal device to be recovered to the connected state. The second access network element serves the terminal device when the terminal device is recovered to the connected state, or the second access network element is configured to send the context to a third access network element that serves the terminal device when the terminal device is recovered to the connected state.

In an implementation, the first access network element and/or the second access network element are/is deployed on a satellite.

In an implementation, the processing unit 701 is specifically configured to determine, based on ephemeris information and/or expected behavior information of the terminal device, that the apparatus 700 cannot serve the terminal device when the terminal device is recovered to the connected state.

In an implementation, the processing unit 701 is further configured to determine, based on the ephemeris information and/or the expected behavior information of the terminal device, that an access network element that serves the terminal device when the terminal device is recovered to the connected state cannot obtain the context from the first access network element, or that duration for obtaining the context from the first access network element exceeds first duration.

In an implementation, the transceiver unit 702 is specifically configured to send a container to the second access network element by using the access management network element, where the container includes the context sent by the first access network element to the second access network element.

In an implementation, the transceiver unit 702 is further configured to send, to the second access network element, time information of entering the suspended state by the terminal device and/or hop count information. The hop count information indicates an accumulated quantity of times that the context is transferred between access network elements in a time period from a time point at which the terminal device enters the suspended state to a current time point.

In an implementation, the processing unit 701 is further configured to delete the context of the terminal device in a first case.

The first case includes one or more of the following: Duration in which the terminal device is in the suspended state exceeds second duration, the accumulated quantity of times indicated by the hop count information exceeds a first quantity of times, duration after the first access network element sends the context exceeds third duration, or the first access network element receives context response information, where the context response message indicates that the context is received and/or stored.

In a possible embodiment, the apparatus 700 is used in the second access network element.

For example, the transceiver unit 702 is configured to receive a request message from the terminal device, and the request message is used to request to recover a connection.

The processing unit 701 is configured to determine that the context of the terminal device cannot be obtained from the first access network element, where the context is used by the terminal device to recover the connection, and the first access network element serves the terminal device before the terminal device requests to recover the connection. The transceiver unit 702 is further configured to obtain the context from the access management network element, where the context is sent by the first access network element to the access management network element.

In an implementation, the first access network element and/or the second access network element are/is deployed on the satellite.

In an implementation, the processing unit 701 is specifically configured to determine, based on one or more pieces of information of duration in which the terminal device is in the suspended state, the ephemeris information, or the hop count information, that the context cannot be obtained from the first access network element. The hop count information indicates the accumulated quantity of times that the context is transferred between access network elements in the time period from the time point at which the terminal device enters the suspended state to the current time point.

In an implementation, the transceiver unit 702 is further configured to receive the time information of entering the suspended state by the terminal device and/or the hop count information.

In an implementation, the transceiver unit 702 is specifically configured to receive the container from the access management network element, where the container includes the context sent by the first access network element to the second access network element.

In an implementation, the transceiver unit 702 is further configured to send context request indication information to the access management network element, where the context request indication information is used to request the context.

In a possible embodiment, the apparatus 700 is used in the access management network element.

For example, the transceiver unit 702 is configured to receive the container, where the container includes the context sent by the first access network element to an access network element that serves the terminal device when the terminal device is recovered to the connected state, the first access network element serves the terminal device before the terminal device requests to recover the connection, the second access network element serves the terminal device when the terminal device is recovered to the connected state, and the context is used by the terminal device to recover the connection. The processing unit 701 is further configured to store the container. The transceiver unit 702 is further configured to send the container to the second access network element, where the second access network element is used to serve the terminal device when the terminal device is recovered to the connected state.

In an implementation, the first access network element and/or the second access network element are/is deployed on the satellite.

In an implementation, the transceiver unit 702 is further configured to receive the context request indication information from the second access network element, where the context request indication information is used to request the context of the terminal device.

In an implementation, the processing unit 701 is further configured to: determine, based on the ephemeris information and/or the expected behavior information of the terminal device, that the terminal device is to recover the connection, and/or determine the second access network element that serves the terminal device when the terminal device is recovered to the connected state.

In an implementation, the processing unit 701 is further configured to: start a timer; and delete the stored container when the timer expires.

It should be noted that in embodiments of this application, division into modules is an example, and is only a logical function division. During an actual implementation, there may be another division manner. In addition, functional units in embodiments of this application may be integrated into one processing unit, or may exist alone physically, or two or more units are integrated into one unit. The integrated unit may be implemented in a form of hardware, or may be implemented in a form of a software functional unit. For example, the transceiver unit may include the receiving unit and/or the sending unit.

When the integrated unit is implemented in the form of a software functional unit and sold or used as an independent product, the integrated unit may be stored in a computer-readable storage medium. Based on such understanding, the integrated unit may be stored in a storage medium as a computer software product, and includes several instructions for instructing a computer device (which may be a personal computer, a server, or a network device) or a processor (processor) to perform all or a part of the steps of the methods in embodiments of this application.

As shown in FIG. 8, an embodiment of this application further provides a schematic diagram of a structure of a communication apparatus 800. The apparatus 800 can be configured to implement the method described in the foregoing method embodiments. Refer to the description in the foregoing method embodiments. For example, the communication apparatus 800 can perform the steps performed by the first access network element, the second access network element, or the access management network element in the methods in FIG. 3 to FIG. 6A and FIG. 6B.

The apparatus 800 includes one or more processors 801. The processor 801 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program. The communication apparatus may include a transceiver unit, configured to input (receive) and output (send) signals. For example, the transceiver unit may be a transceiver or a radio frequency chip.

The apparatus 800 includes one or more processors 801, and the one or more processors 801 may implement the method in the foregoing embodiments. Optionally, in addition to implementing the method in the foregoing embodiments, the processor 801 may further implement another function.

In a design, the processor 801 may execute instructions, so that the communication apparatus 800 performs the method described in the foregoing method embodiments. The instructions may be all or partially stored in the processor 801. For example, instructions 803 may be all or partially stored in the processor 801, or instructions 803 are stored in the processor 801, and instructions 804 are stored in a memory 802 coupled to the processor. The processor 801 may synchronously execute the instructions 803 and the instructions 804, so that the apparatus 800 performs the method described in the foregoing method embodiments. The instructions 803 and the instructions 804 are also referred to as computer programs.

In another possible design, the communication apparatus 800 may further include a circuit, and the circuit may implement a function in the foregoing method embodiments.

In another possible design, the communication apparatus 800 may include one or more memories 802. The memory 802 stores the instructions 804. The instructions may be run on the processor 801, so that the communication apparatus 800 performs the method described in the foregoing method embodiments. Optionally, the memory 802 may further store data. Optionally, the processor 801 may also store instructions and/or data. For example, the one or more memories 802 may store a correspondence described in the foregoing embodiments, or the related parameter, table, or the like in the foregoing embodiments. The processor and the memory may be separately disposed, or may be integrated with each other.

In another possible design, the apparatus 800 may further include a transceiver 805 and an antenna 806. The processor 801 may be referred to as a processing unit, and is configured to control the apparatus (the terminal or the base station). The transceiver 805 may be referred to as a transceiver machine, a transceiver circuit, the transceiver unit, or the like, and is configured to implement a transceiver function of the apparatus through the antenna 806.

The processor may be a general-purpose central processing unit (central processing unit, CPU), a microprocessor, an application-specific integrated circuit (application-specific integrated circuit, ASIC), one or more integrated circuits configured to control program execution of the solutions of this application, a general-purpose processor, a digital signal processor (digital signal processor, DSP), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly executed and accomplished by using a hardware decoding processor, or may be executed and accomplished by using a combination of hardware and software modules in a decoding processor. The software module may be in a storage medium, and the storage medium is located in the memory.

The memory may be a volatile memory or a nonvolatile memory, or may include the volatile memory and the nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (synchronous link DRAM, SLDRAM), and a direct rambus random access memory (Direct Rambus RAM, DR RAM). It should be noted that the memory of the systems and methods described in this specification includes but is not limited to these and any memory of another proper type. The memory may exist independently, and is connected to the processor through a communication line. The memory may alternatively be integrated with the processor.

An embodiment of this application further provides a computer-readable medium. The computer-readable medium stores a computer program. When the computer program is executed by a computer, the communication method in any one of the foregoing method embodiments is implemented.

An embodiment of this application further provides a computer program product, including a computer program. When the computer program is executed by a computer, the communication method in any one of the foregoing method embodiments is implemented.

An embodiment of this application further provides a communication system, including a first access network element and a second access network element. The first access network element and the second access network element may implement the communication method in any one of the foregoing method embodiments.

Optionally, the communication system further includes one or more of a terminal device and an access management network element, and the access management network element may implement the communication method in any one of the foregoing method embodiments.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, the procedure or functions according to embodiments of this application are all or partially generated. The computer may be the foregoing communication apparatus. The computer instructions may be stored in a computer-readable storage medium or may be transmitted from a computer-readable storage medium to another computer-readable storage medium. The computer-readable storage medium may be the foregoing storage medium or the foregoing memory.

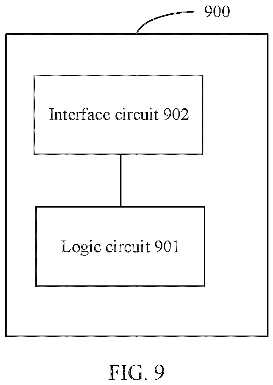

In a possible design, when the communication apparatus is a chip like a chip in a network device or a chip in a terminal device, a determining unit or the processor 801 may be one or more logic circuits, and a sending unit or a receiving unit or the transceiver 805 may be an input/output interface, which may be referred to as a communication interface, an interface circuit, an interface, or the like. Alternatively, the transceiver unit 805 may be a sending unit and a receiving unit. The sending unit may be an output interface, and the receiving unit may be an input interface. Alternatively, the sending unit and the receiving unit are integrated into one unit, for example, an input/output interface. As shown in FIG. 9, a communication apparatus 900 shown in FIG. 9 includes a logic circuit 901 and an interface circuit 902. To be specific, the processing unit or the processor 801 may be implemented by using the logic circuit 901, and the transceiver unit or the transceiver 805 may be implemented by using the interface circuit 902. The logic circuit 901 may be a chip, a processing circuit, an integrated circuit, a system on chip (system on chip, SoC), or the like. The interface circuit 902 may be a communication interface, an input/output interface, or the like. In this embodiment of this application, the logic circuit and the interface circuit may further be coupled to each other. A specific connection manner of the logical circuit and the interface circuit is not limited in embodiments of this application.

In some embodiments of this application, the logic circuit 901 and the interface circuit 902 may be configured to perform a function, an operation, or the like performed by the foregoing network function or the foregoing control plane function. The interface circuit 902 may be configured to: receive a signal from another communication apparatus other than the communication apparatus 900 and transmit the signal to the logic circuit 901, or send a signal from the logic circuit 901 to another communication apparatus other than the communication apparatus 900. The logic circuit 901 may be configured to implement any one of the foregoing method embodiments by executing code instructions.

For example, the interface circuit 902 is configured to send a context of the terminal device to a second access network element. For functions or operations performed by the communication apparatus, refer to the foregoing method embodiments. Details are not described herein again.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual coupling or direct coupling or communication connection may be implemented through some interfaces, indirect coupling or communication connections between the apparatuses or units, or electrical connections, mechanical connections, or connections in other forms.

The units described as separate parts may or may not be physically separate, and parts displayed as units may or may not be physical units, that is, may be located in one position, or may be distributed on a plurality of network units. Some or a part of the units may be selected based on actual requirements to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

With description of the foregoing implementations, a person skilled in the art may clearly understand that this application may be implemented by hardware, firmware, or a combination thereof. When the present invention is implemented by software, the foregoing functions may be stored in a computer-readable medium or performed transmission as one or more instructions or code in the computer-readable medium. The computer-readable medium includes a computer storage medium and a communication medium, where the communication medium includes any medium that enables a computer program to be performed transmission from one place to another. The storage medium may be any available medium accessible to a computer.

In conclusion, the foregoing are merely examples of embodiments of the technical solutions of this application, but are not intended to limit the protection scope of this application. Any modification, equivalent replacement, or improvement made without departing from the principle of this application shall fall within the protection scope in this application.

## Claims

1. A communication method, wherein the method comprises:
determining, by a first access network element, that a terminal device is in a suspended state and that the first access network element cannot serve the terminal device when the terminal device is recovered to a connected state; and
sending, by the first access network element, a context of the terminal device to a second access network element, wherein the context is used by the terminal device to be recovered to the connected state, wherein
the second access network element serves the terminal device when the terminal device is recovered to the connected state, or the second access network element is configured to send the context to a third access network element that serves the terminal device when the terminal device is recovered to the connected state.

2. The method according to claim 1, wherein the first access network element and/or the second access network element are/is deployed on a satellite.

3. The method according to claim 1 or 2, wherein the determining, by a first access network element, that the first access network element cannot serve the terminal device when the terminal device is recovered to a connected state comprises:
determining, by the first access network element based on ephemeris information and/or expected behavior information of the terminal device, that the first access network element cannot serve the terminal device when the terminal device is recovered to the connected state.

4. The method according to any one of claims 1 to 3, wherein the method further comprises:
determining, by the first access network element based on the ephemeris information and/or the expected behavior information of the terminal device, that an access network element that can serve the terminal device when the terminal device is recovered to the connected state cannot obtain the context from the first access network element, or that duration for obtaining the context from the first access network element exceeds first duration.

5. The method according to any one of claims 1 to 4, wherein the sending, by the first access network element, a context of the terminal device to a second access network element comprises:
sending, by the first access network element, a container to the second access network element by using an access management network element, wherein the container comprises the context sent by the first access network element to the second access network element.

6. The method according to any one of claims 1 to 5, wherein the method further comprises:
in a first case, deleting, by the first access network element, the context of the terminal device, wherein
the first case comprises one or more of the following: duration in which the terminal device is in the suspended state exceeds second duration, an accumulated quantity of times indicated by hop count information exceeds a first quantity of times, duration after the first access network element sends the context exceeds third duration, or the first access network element receives context response information, the hop count information indicates the accumulated quantity of times that the context is transferred between access network elements in a time period from a time point at which the terminal device enters the suspended state to a current time point, and the context response message indicates that the context is received and/or stored.

7. The method according to claim 6, the method further comprises:
sending, by the first access network element to the second access network element, time information of entering the suspended state by the terminal device and/or the hop count information.

8. A communication method, wherein the method comprises:
receiving, by a second access network element, a request message from a terminal device, wherein the request message is used to request to recover a connection;
determining, by the second access network element, that a context of the terminal device cannot be obtained from a first access network element, wherein the context is used by the terminal device to recover the connection, and the first access network element serves the terminal device before the terminal device requests to recover the connection; and
obtaining, by the second access network element, the context from an access management network element, wherein the context is sent by the first access network element to the access management network element.

9. The method according to claim 8, wherein the first access network element and/or the second access network element are/is deployed on a satellite.

10. The method according to claim 8 or 9, wherein the determining, by the second access network element, that a context of the terminal device cannot be obtained from a first access network element comprises:
determining, by the second access network element based on one or more pieces of information of duration in which the terminal device is in a suspended state, ephemeris information, or hop count information, that the context cannot be obtained from the first access network element, wherein the hop count information indicates an accumulated quantity of times that the context is transferred between access network elements in a time period from a time point at which the terminal device enters the suspended state to a current time point.

11. The method according to claim 10, wherein the method further comprises:
receiving, by the second access network element, time information of entering the suspended state by the terminal device and/or the hop count information.

12. The method according to any one of claims 8 to 11, wherein the obtaining, by the second access network element, the context from an access management network element comprises:
receiving, by the second access network element, a container from the access management network element, wherein the container comprises the context sent by the first access network element to the second access network element.

13. The method according to claim 12, wherein before the receiving, by the second access network element, a container from the access management network element, the method further comprises:
sending, by the second access network element, context request indication information to the access management network element, wherein the context request indication information is used to request the context.

14. A communication method, wherein the method comprises:
receiving, by an access management network element, a container, wherein the container comprises a context sent by a first access network element to a second access network element, the first access network element serves a terminal device before the terminal device requests to recover a connection, the second access network element serves the terminal device when the terminal device is recovered to a connected state, and the context is used by the terminal device to recover the connection;
storing, by the access management network element, the container; and
sending, by the access management network element, the container to the second access network element.

15. The method according to claim 14, wherein the first access network element and/or the second access network element are/is deployed on a satellite.

16. The method according to claim 14 or 15, wherein before the sending, by the access management network element, the container to the second access network element, the method further comprises:
receiving, by the access management network element, context request indication information from the second access network element, wherein the context request indication information is used to request the context.

17. The method according to claim 14 or 15, wherein before the sending, by the access management network element, the container to the second access network element, the method further comprises:
determining, by the access management network element based on ephemeris information and/or expected behavior information of the terminal device, that the terminal device is to recover the connection, and/or determining the second access network element that serves the terminal device when the terminal device is recovered to the connected state.

18. The method according to any one of claims 14 to 17, after the receiving, by an access management network element, a container, the method further comprises:
starting, by the access management network element, a timer; and
deleting, by the access management network element, the stored container when the timer expires.

19. A communication apparatus, comprising a processing unit and a transceiver unit, wherein
the processing unit is configured to determine that a terminal device is in a suspended state and that the communication apparatus cannot serve the terminal device when the terminal device is recovered to a connected state;
the transceiver unit is configured to send a context of the terminal device to a second access network element, wherein the context is used by the terminal device to be recovered to the connected state; and
the second access network element serves the terminal device when the terminal device is recovered to the connected state, or the second access network element is configured to send the context to a third access network element that serves the terminal device when the terminal device is recovered to the connected state.

20. The apparatus according to claim 19, wherein the communication apparatus and/or the second access network element are/is deployed on a satellite.

21. The apparatus according to claim 19 or 20, wherein the processing unit is specifically configured to determine, based on ephemeris information and/or expected behavior information of the terminal device, that the communication apparatus cannot serve the terminal device when the terminal device is recovered to the connected state.

22. The apparatus according to any one of claims 19 to 21, wherein the processing unit is specifically configured to determine, based on the ephemeris information and/or the expected behavior information of the terminal device, that an access network element that can serve the terminal device when the terminal device is recovered to the connected state cannot obtain the context from the communication apparatus, or that duration for obtaining the context from the communication apparatus exceeds first duration.

23. The apparatus according to any one of claims 19 to 22, wherein the transceiver unit is specifically configured to send a container to the second access network element by using an access management network element, wherein the container comprises the context sent by the communication apparatus to the second access network element.

24. The apparatus according to any one of claims 19 to 23, wherein the processing unit is further configured to delete the context of the terminal device in a first case; and
the first case comprises one or more of the following: duration in which the terminal device is in the suspended state exceeds second duration, an accumulated quantity of times indicated by hop count information exceeds a first quantity of times, duration after the communication apparatus sends the context exceeds third duration, or the communication apparatus receives context response information, the hop count information indicates the accumulated quantity of times that the context is transferred between access network elements in a time period from a time point at which the terminal device enters the suspended state to a current time point, and the context response message indicates that the context is received and/or stored.

25. The apparatus according to claim 24, wherein the transceiver unit is further configured to send, to the second access network element, time information of entering the suspended state by the terminal device and/or the hop count information.

26. A communication apparatus, comprising a processing unit and a transceiver unit, wherein
the transceiver unit is configured to receive a request message from a terminal device, and the request message is used to request to recover a connection;
the processing unit is configured to determine that a context of the terminal device cannot be obtained from a first access network element, wherein the context is used by the terminal device to recover the connection, and the first access network element serves the terminal device before the terminal device requests to recover the connection; and
the transceiver unit is further configured to obtain the context from an access management network element, wherein the context is sent by the first access network element to the access management network element.

27. The apparatus according to claim 26, wherein the first access network element and/or the communication apparatus are/is deployed on a satellite.

28. The apparatus according to claim 26 or 27, wherein the processing unit is specifically configured to determine, based on one or more pieces of information of duration in which the terminal device is in a suspended state, ephemeris information, or hop count information, that the context cannot be obtained from the first access network element, wherein the hop count information indicates an accumulated quantity of times that the context is transferred between access network elements in a time period from a time point at which the terminal device enters the suspended state to a current time point.

29. The apparatus according to claim 28, wherein the transceiver unit is further configured to receive time information of entering the suspended state by the terminal device and/or the hop count information.

30. The apparatus according to any one of claims 26 to 29, wherein the transceiver unit is specifically configured to receive a container from the access management network element, wherein the container comprises the context sent by the first access network element to the communication apparatus.

31. The apparatus according to claim 30, wherein the transceiver unit is further configured to send context request indication information to the access management network element, wherein the context request indication information is used to request the context.

32. A communication apparatus, comprising a processing unit and a transceiver unit, wherein
the transceiver unit is configured to receive a container, wherein the container comprises a context sent by a first access network element to a second access network element, the first access network element serves a terminal device before the terminal device requests to recover a connection, the second access network element serves the terminal device when the terminal device is recovered to a connected state, and the context is used by the terminal device to recover the connection;
the processing unit is configured to store the container; and
the transceiver unit is further configured to send the container to the second access network element.

33. The apparatus according to claim 32, wherein the first access network element and/or the second access network element are/is deployed on a satellite.

34. The apparatus according to claim 32 or 33, wherein the transceiver unit is further configured to receive context request indication information from the second access network element, wherein the context request indication information is used to request the context.

35. The apparatus according to claim 32 or 33, wherein the processing unit is further configured to: determine, based on ephemeris information and/or expected behavior information of the terminal device, that the terminal device is to recover the connection, and/or determine the second access network element that serves the terminal device when the terminal device is recovered to the connected state.

36. The apparatus according to any one of claims 32 to 35, wherein the processing unit is further configured to: start a timer, and delete the stored container when the timer expires.

37. A communication apparatus, comprising a processor, wherein the processor is coupled to a memory; and
the processor is configured to execute a computer program or instructions stored in the memory, to enable the apparatus to perform the method according to any one of claims 1 to 18.

38. A communication apparatus, comprising a logic circuit and an interface circuit, wherein the interface circuit is configured to: receive a signal from a communication apparatus other than the communication apparatus and transmit the signal to the logic circuit, or send a signal from the logic circuit to a communication apparatus other than the communication apparatus; and the logic circuit executes code instructions, to implement the method according to any one of claims 1 to 18.

39. A computer-readable storage medium, comprising a computer program or instructions, wherein when the computer program or the instructions is/are run on a computer, the method according to any one of claims 1 to 18 is performed.

40. A computer program product, comprising a computer program or instructions, wherein when the computer program or the instructions is/are run on a computer, the method according to any one of claims 1 to 18 is performed.

41. A communication system, comprising a first access network element configured to perform the method according to any one of claims 1 to 7, and a second access network element configured to perform the method according to any one of claims 8 to 13.

42. A chip system, wherein the chip system comprises:
a processor and a memory, the processor is coupled to the memory, the memory is configured to store a program or instructions, and when the program or the instructions is/are executed by the processor, the method according to any one of claims 1 to 18 is implemented.
